# EUROPEAN PATENT APPLICATION

(11) **EP 4 152 209 A1**
(43) Date of publication of application: **22.03.2023**
(21) Application number: 21197359.9
(22) Date of filing: 17.09.2021
(51) Int. Cl.: G06N 3/04, G06N 3/08

(54) **NEURAL NETWORK TRAINING METHOD AND SYSTEM FOR SPECIFIC DYNAMIC CONTEXT OF AN EMBEDDED DEVICE**

(71) Applicant: Siemens Aktiengesellschaft, 80333 München (DE)
(72) Inventor: Figalist, Iris, 33014 Bad Driburg (DE); Horn, Stefan, 91056 Erlangen (DE); Telschig, Kilian, 81543 München (DE)
(74) Representative: Siemens Patent Attorneys

(57) **Abstract**

A neural network training method and system is provided for specific dynamic context of an embedded device (ed). After splitting an input data set into several input data portions, at least a basic input data portion (b) and a specialization input data portion (sp), which corresponds to the specific dynamic context of the embedded device (ed), a basic training of an ensemble network (en) is performed based on basic input data, by multiplexing input data to multiple (m) network instances (net) of same neural network, which multiple (m) instances (net) form the ensemble network (en), then initializing a training procedure on each network instance (net), followed by aggregating the multiple predictions as output data made by multiple (m) instances (net). The performance of a special training of the ensemble network (en) with a first portion of the specialization input data (sp) is followed by a selection of a subset specific ensemble (en_n/sp) out of the multiple (m) network instances (net) of the special trained ensemble network (enm/sp), by comparing the results of the individual networks (net) with the ensemble's based on a second portion of the specialization input data (sp) fed into both, the special trained ensemble network (en_sp) and each of its individual networks (net), and by a performance of an imitation training of the selected (pick) subset ensemble network based on third portion of specialization input data (sp), comprising continued learning from target results from special trained ensemble network (en_sp).

## Description

### Technical field

The present invention relates to a computer implemented method and computing system for neural network training. Furthermore, a corresponding embedded device, computing device, and computer-readable medium with executable instructions are provided.

### Background

Up to now, embedded machines, like raspberry pies with very limited computing and communication resources, can only autonomously adapt their behavior to their specific situation or location, e.g. because they might not even have a connection to each other or to a coordinating node, or because the interdependencies between the machine's decisions are unknown. Each possible situation or location of an embedded device has unique, partly yet unknown characteristics, which also can change over time. Up to now, these are constantly monitored and formulas must be changed actively.

A known approach for AI-based forecasts uses ensemble networks. Such ensembles use a multiple of the computing resources of one network instance respectively, not only during training, but also during operation. Using an ensemble of fifty copies of one neural network, the ensemble requires fifty times more memory and, assuming linear scaling, fifty times more computing time (e.g. CPU time) and thus energy (e.g. battery). Thus, while ensemble networks make better predictions, they cannot always be utilized on constrained devices. Especially small embedded devices, like raspberry pies, would not be able to raise the energy consumption.

An alternative could be to deploy smaller technologies with reduced prediction quality, e.g. simply one individual neural network or other technologies such as support vector machines, or the whole ensemble network is used, which has a high footprint. Another alternative is making the decisions on a more powerful node, which however requires communication capabilities which also may cost too much energy in some embedded use cases. Leaving embedded machines with static models, is not an alternative.

### Summary of the invention

It is therefore a goal of the present invention to provide a computer implemented method for training a neural network which overcomes the above-mentioned disadvantages. In particular, a neural network training system for training a neural network shall be provided, in which the advantageous method performs. A further goal of the invention is to provide a corresponding embedded device, computing device, and a non-transitory computer-readable medium.

This object is solved by the subject matter of the independent claims. Further advantageous features are subject matter of the dependent claims.

According to a first aspect of the invention, a computer implemented method for a neural network training for specific dynamic context of an embedded device is provided, comprising: Splitting an input data set into several input data portions, at least a basic input data portion, which corresponds the dynamic context of embedded devices from any other or same installation of the target system, and a specialization input data portion, which corresponds to the specific dynamic context of the embedded device, performing a basic training of an ensemble network based on basic input data, by multiplexing input data to multiple network instances of same neural network, which multiple instances form the ensemble network, then initializing a training procedure on each network instance, followed by aggregating the multiple predictions as output data made by multiple instances, performing a special training of the ensemble network with a first portion of the specialization input data, selecting a subset specific ensemble out of the multiple network instances of the special trained ensemble network, by comparing the results of the individual networks with the ensemble's or the results of the ensemble and with the smaller ensemble, or comparing ensemble cluster and individuals, based on a second portion of the specialization input data fed into both, the special trained ensemble network and each of its individual networks, and performing an imitation training of the selected subset ensemble network based on third portion of specialization input data, comprising continued learning from target results from special trained ensemble network. The m-ensemble with m individual networks can be reduced to an n-ensemble with n<m individual networks, even reduced down to a 1-ensemble, by comparing the results with each possible n-ensembles' results. More clearly, the whole ensemble can be compared with each individual network for selecting the top n best individual imitators, or the whole network can be compared with each n-subset for getting the best-imitating n-ensemble, or each k-cluster of the whole network can be compared with each individual for getting the best cluster representatives.

This has, among others, the advantage that aggregating the multiple predictions made by multiple instances leads to a more balanced forecast.

Input data, in the context of this application e.g. comprises history data of several or one embedded machine. Input data comprises basic data and/or specific dynamic context of an embedded machine.

An ensemble network, also called ensemble cluster, comprises for example multiple instances of the same neural network, which run through the same training procedure, but are initialized randomly. An ensemble network is basically an aggregation of multiple, preferably identical, individual neural network models.

The initializing of the training procedure on each network instance is preferably randomly.

The proposed method has the advantage of using the quality advantage of ensemble networks but keeping the operational network small in order to minimize the required computing resources like CPU, memory and/or energy.

In a further advantageous embodiment of the method according to the invention, a neural network training method is provided, wherein the selection step is based on closest emulation of the ensemble network.

Aggregating in the context of this application, meaning combining into a decision, e.g. by voting the output of the majority or taking the outputs' averages.

Closest emulation, in the context of the application meaning based on determined distance function. This distance function could calculate a scalar minimum, maximum or average value in the sense of a metric distance over an output vector or continuum of several output vectors. An alternative distance function is, e.g., a Manhattan distance function.

There is an extension point though, since within the ensemble network, there might be similar individual networks with divergent results. In such a case, the distance function should be restricted to the output results of a subset of the cluster. In a combined approach, the distance function is restricted to the output results of a subset of the cluster at first but closest individual network is calculated additionally to achieve sort of representation of the cluster.

In another advantageous embodiment of the method according to the invention, a neural network training method is provided, wherein the selection step is based on an ensemble decision algorithm.

Selection data in the context of the application meaning a percentage of the location-specific data, for example about 5%. This part is used to compare the outputs of the individual networks within the ensemble of a first number m of individual networks to the overall output of the ensemble. In this step, the networks are not trained, but only evaluated by looking at which outputs the individual networks and the ensemble as a whole produce for the same input data.

Based on these input-output-pairs a decision is made which of the individual networks best emulates the ensemble behavior. This one then functions as basis for further training. This decision depends on the ensemble decision algorithm and preferably is adapted to the use case.

For example, if the ensemble decision is based on voting and the outputs are discrete, an individual network might be selected which had the same output as the ensembles most of the time. If the outputs are continuous, the individual network would be selected, which individual networks output vector had the smallest distance to the ensemble output vector most of the time. Big outliers could be avoided for example by first excluding individual networks the outputs of which were occasionally too different from the ensemble before looking at how often it came close to the ensemble's opinion.

In another advantageous embodiment, there is a possibility that the selection can be based on the average distance of the output vectors. In essence, the selection is done by sorting the individual networks using a use-case-specific order over sequences of input-output-pairs, followed by creation of a small ensemble as copy of the special ensemble removing the non-selected individual networks. The resulting small ensemble is called reduced special ensemble, because it has the parameters (weights) trained for the location-specific data and only a reduced number n of individual network inside.

In a further advantageous embodiment of the method according to the invention, a neural network training method is provided, comprising an initialization training, in which a basic training of the ensemble network is performed based on subset of the basic input data, followed by a selection of a subset specific ensemble is based on a minor subset of basic input data and an imitation training is performed with the remaining subset of the basic input data, and followed by deploying the initially trained subset ensemble network to an embedded device.

The meaning of the wording subset in the context of the application for example approaches a subset of 50%, a minor subset preferably could be about 5%, while the remaining subset than is about 45%.

In another advantageous embodiment of the method according to the invention, a neural network training method is provided, comprising an initialization training, in which a special training of the ensemble network is performed based on specialization input data from another embedded device in another specific dynamic context, which is assumed to have similar dynamics, or synthetic data from a model of the dynamics.

In a further advantageous embodiment of the method according to the invention, a neural network training method is provided, wherein there are up to m=50 individual networks, preferably up to m=100 networks.

The number m of individual networks building the ensemble network has to be increased, the more ambiguous the optimization problem gets. If the outputs of any individual network are biased through random initialization, the number of networks has to increase to achieve reliable models. The reduced network preferably provides a number n of individual networks of only 10%, or even less like down to 5% or 1% of the number m of individual networks in the ensemble network. Preferably the reduced network comprises about 1 to 10, e.g. about 5 individual networks.

The advantage is, that the reduced ensemble network allows for fulfilling requirements of the embedded machine. Further, keeping small the operational network leads to minimize the required computing resources, e.g. CPU, memory and/or energy. The subset ensemble in the context of this application can also be called a reduced ensemble of n networks down to at least 1 network. Meaning, the subset ensemble can be a single network instance or a number n of network instances, n < m, m being the total number of the multiple network instances.

The selection however preferably is done by sorting the individual networks using a use-case-specific order over sequences of input-output-pairs. Then, a small ensemble is created as a copy of the ensemble of multiple (m) special trained individual networks from which non-selected individual networks are removed. The resulting small ensemble is called reduced ensemble or special trained reduced ensemble because it has the parameters, e.g. weights, trained for the location-specific or context-specific data while having only 1 up to n individual networks inside. The expression specific ensemble in this context is used for ensembles after a special training step.

According to a second aspect of the invention, a neural network training system for training a neural network for specific dynamic context of an embedded device is provided, the training system comprising a plurality of embedded devices, each with at least a storage for history data, wherein any of the embedded devices provides very limited computing resources and each with at least one communication path to a trainer, the trainer, configured to perform the basic training, the special training, the selection algorithm and the imitation training, comprising a storage for all history data from any of the embedded devices, and at least one communication path to and from the embedded device.

The embedded devices (ed, ed_diff) are resource constrained, meaning for example the memory capacity is reduced, e.g. RAM is under 1GB. CPU's clock rate is lower than 1 GHz. Even the power supply of an embedded device is subject to resource constraints like limitation of an accumulator or battery. In any case, the optimization could be used in large systems too.

Significant though is the dynamic and individual context in which the computing devices (ed, ed_diff) are embedded. Examples could be wind power plants, especially their turbine control units. Every wind power station has to deal with individual wind conditions. At least a sensor, user interface and/or actuator is comprised. The connection to the trainer though, could be interrupted or interruptable respectively. An alternative could be regular data updates and/or data collections, for example in the context of regular services.

A trainer in the context of this application preferably is an industrial PC or Web-Server or is placed in a cloud solution. Optimizing the training speed could be based on a time series data bank, utilizing neuro chips, SSDs and/or efficient storage networks.

According to a third aspect of the invention, an embedded device is provided, comprising network instance trained according to a method for a neural network training for specific dynamic context of an embedded device according to the first aspect of the invention.

According to a fourth aspect of the invention, a computing device is provided, configured to perform the neural network training method for specific dynamic context of an embedded device according to the first aspect of the invention.

According to a further aspect of the invention, a non-transitory computer-readable medium provided with executable instructions that, when executed, cause a computing device to process the training method for a neural network training for specific dynamic context of an embedded device according to the first aspect of the invention.

According to a further aspect of the invention, a computer program product is provided. This computer program product comprises instruction, in particular program code. The instructions are executable by at least one processor. When the program is executed by a computer system, the computer system carrys out the steps of the method according to the invention, as described above. Meaning, executing the program code causes the at least one processor to perform one of the methods for a neural network training for specific dynamic context of an embedded device according to the first aspect of the invention. In addition, a provision apparatus for the aforementioned computer program product is provided, wherein the provision apparatus stores and/or provides the computer program product.

Although specific features described in the above summary and the following detailed description are described in connection with specific embodiments and aspects of the present invention, it should be understood that the features of the exemplary embodiments and aspects may be combined with each other, and correlate to each other, unless specifically noted otherwise. Therefore, the above summary is merely intended to give a short overview over some features of some embodiments and implementations and is not to be construed as limiting. Other embodiments may comprise other features than the ones explained above.

### Brief description of the drawings

The above and other elements, features, steps, and characteristics of the present disclosure will be more apparent from the following detailed description of embodiments with reference to the following figures:
- Figure 1: illustrates a schematic drawing of the ensemble network (en) and a reduced network.
- Figure 2: illustrates a schematic drawing of the training system (tr) performing a basic training (Step 1) and initial deployment (ini) of an embedded device (ed) .
- Figure 3: illustrates a schematic drawing of the training system (tr) performing a special training (Step 2).

### Detailed description of embodiments:

In the following, embodiments of the invention will be described in detail with reference to the accompanying drawings. It is to be understood that the description of embodiments is not to be taken in a limiting sense. The drawings are taken to be illustrative only. The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, modules or other physical or functional units shown in the drawings or described herein may also be implemented by a direct or indirect, connection or coupling. A coupling between components may be established wired or over a wireless connection. Functional blocks, computing devices, nodes or entities may be implemented in hardware, firmware, software, or a combination thereof.

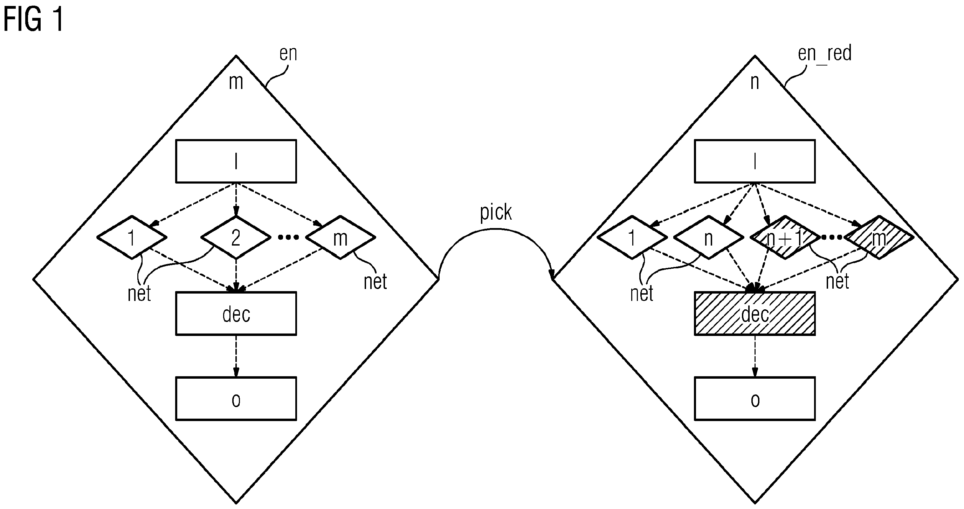

Figure 1 illustrates a schematic drawing of an ensemble network en on the left side, consisting of a number m of individual neural networks net. Next to it, a reduced network, en_red, consisting of only n individual networks is "picked" out of the ensemble network en.

The input data I is multi-casted to each individual network net and the results are aggregated, e.g. by averaging each output O. For the reduced network en_red, e.g. the n most balanced of the m individual networks net are chosen. Due to the architecture it is possible to choose the top n or only 1 most balanced individual networks, dependent on the resources on the embedded machine.

In an exemplary approach ensemble networks en of different sizes are used. These ensemble networks en are trained with different data in the stages from the initial general training over the training for a special context, like a special location or specific requirement, to the final runtime model tnm. Figure 1 shows the base models of ensemble networks en used for this approach. An ensemble network en is basically an aggregation of multiple (usual identical) individual neural network models net. The input data I is multiplexed to each of these individual networks net and their outputs O are combined into a decision dec, e.g. by voting the output of the majority or taking the outputs' averages.

In this example, a larger ensemble network en and a smaller one en_red is used. One ensemble en is made of m individual networks net for the bigger model and a smaller ensemble en_red comprises only n, n<m, individual networks net inside. However, any number of individual models is possible. The number depends on the use case, for example on how much the bigger ensemble's en intuition can be emulated by the smaller one in the specific use case. Intuition comprising the quality of predictions, e.g. percentage of accurate predictions, or expected or average distance from predictions to reality.

In the tabular, an overview of the training procedure steps is presented. These steps preferably are completed to finally set the parameters or weights of the small ensemble en_red, so that it produces good outputs, e.g. predictions, by emulating the behavior of the larger ensemble en. The dataset, e.g. history data, therefore is split into following parts and corresponding training steps:

| Step 1 Basic training | Step 2 Special training | Step 3 Selection | Step 4 Imitation training |
|---|---|---|---|
| Training basic ensemble network with general data from any dynamic context, e.g. from several embedded machines in similar dynamic context | Further Training ensemble network with first portion of specialized data from one specific dynamic context of one embedded machine | Choosing a subset (n) of the multiple (m) network instances by Comparing the results of the individual networks with the ensemble's. | Further Training of subset ensemble network with third portion of specialized data from one specific dynamic context and continued learning from difference to target results from specialized ensemble network (after Step 2) |
| | | Therefor a second portion of the specific dynamic context data is fed into both, the special trained ensemble network and each of its individual networks. | |

The initial, basic (b) ensemble network en (m/b) consists of m individual networks net and is trained using general, multi-context data hist_diff, e.g. from different locations. General data or basic data hist_diff in the context of this application stands for enough data points for machine's contexts other than the one the special training is for. This part is used to show the big ensemble the general dynamics of the prediction and/or decision making. After learning from this dataset hist_diff, the big ensemble is called basic ensemble network en (m/b).

Afterwards, this network en (m/b) can make reasonable predictions, but is not specialized for its location. It consists of m individual basic networks net. Then a copy of the ensemble en (m/b) is used to initialize a context-specific ensemble network en_sp (m) which is trained using location-specific data hist_sp. As specialization data, hist_sp, meaning context-specific, e.g. location-specific data, only a percentage of e.g. about 50% of the overall data is used, depending on the use case, to further specialize the basic ensemble en (m/b) towards the dynamics of the specific context. After learning from this dataset, the ensemble is called context-specific ensemble network en_sp (m). If the embedded machine had enough resources, the context-specific ensemble network en_sp (m) could be deployed to production. However, subsequent steps are provided to reduce the size of this network.

Afterwards, the selection data, another percentage of about 5% of the location-specific data hist_sp is fed into both, the context-specific ensemble network en_sp (m) and each of its individual networks net or the other comparison objects as mentioned above. The n individual networks net, either the best n individual networks or the best n-network, the outputs O of which are closest to the ensemble's output or which best represent the most important clusters, are chosen as context-specific reduced network en_red (n).

The selection step comprises comparing the results of the individual networks (net) with the ensemble's based on a second portion of the specialization input data sp fed into both, the special trained ensemble network en_sp and each of its individual networks net, or comparing the results of n-ensembles of the individual networks net with the ensemble's based on a second portion of the specialization input data sp fed into both, the special trained ensemble network en_sp and each of its possible n-ensembles of individual networks net, or
comparing the results of the individual networks net with each k-cluster of the ensemble based on a second portion of the specialization input data sp fed into both, each k-cluster of the special trained ensemble network en_sp and each of its individual networks net.

Selection data, in the context of this application, preferably comprises a percentage of e.g about 5% of the location-specific data hist_sp. This part is used to compare the outputs O of the individual networks net within the context-specific ensemble network en_sp (m) to the overall output of the ensemble. In this step, the networks net are not trained, but only evaluated by looking at which outputs O the individual networks net and the ensemble en as a whole produce for the same input data I. Based on these input-output-pairs I/O a decision is made (pick), which of the individual networks best represent and/or emulate the ensemble behavior as basis for further training. This pick-decision depends on the use case and especially on the ensemble decision algorithm.

Finally, the remaining percentage of about 45% of the context-specific data hist_sp is used as imitation data for the ensemble feedback training of the context-specific reduced network en_red (n) using the context-specific ensemble network en_sp (m): The final trained network model tnm results from rewarding the context-specific reduced network en_red (n) based on the distance of its output vector from the outputs O of the context-specific ensemble network en_sp (m). The context-specific ensemble network en_sp (m) is not further trained in this final step, because the purpose of this step is to retrieve a specific trained network model tnm, which makes the most similar predictions compared to the context-specific ensemble network en_sp (m). The imitation training is used to further train the context-specific reduced network en_red (n) so that its outputs O come even closer to the output O of the context-specific ensemble network en_sp (m). The context-specific ensemble network en_sp (m) is used as supervisor for this stage, i.e., the data is input to both networks, and the output of the context-specific ensemble network en_sp (m) is taken as the expected output of the context-specific reduced network en_red (n). The context-specific reduced network en_red (n) learns from the difference vector between the output vectors. The resulting small ensemble is the trained network model tnm, that is finally deployed to the embedded system ed. The trained network model consists of only n individual networks net, as the most reduced example n=1, and it is specialized for the specific context dynamics and it is trained to imitate the behavior of the big ensemble for a more balanced prediction and/or decision.

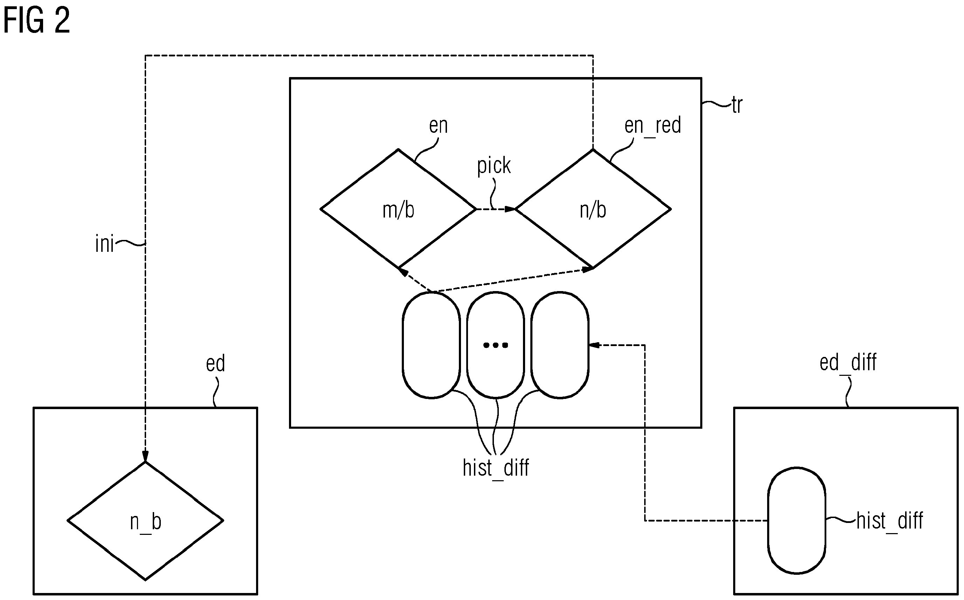

The described training procedure preferably is done on a powerful training machine tr, e.g. in a cloud. It requires data hist_diff, gathered from several machines ed_diff which had been running before. It also requires context-specific data hist_sp, which is only available after the machine ed had been running for a while. For the initial deployment of a new machine ed, an adapted training for initialization procedure ini is provided, which produces acceptable outputs O until enough data hist_sp has been gathered, compare Figure 2.

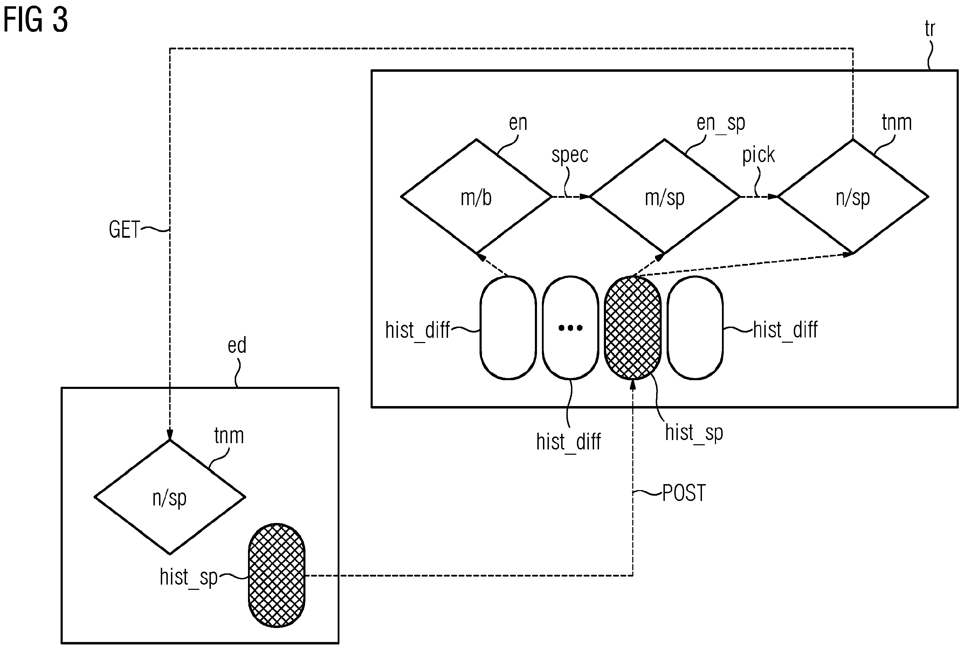

Initially, the basic ensemble network en (m/b) is trained as described before, however, with only a percentage, e.g. about 50%, of the general data hist_diff. Then the specialization training, Step2, is skipped, as no context-specific data is available yet. For the selection training, Step 3, an even smaller percentage, e.g. about 5%, of the general data hist_diff is used, to get to a reduced network. Finally, the imitation training, step 4, is performed based on the remaining percentage of the general data hist_diff to get an initial trained network model en red. This initial network en_red is then deployed (ini) to the machine ed. In a different approach, it would be possible to use context-specific data from another machine ed, which is assumed to have similar dynamics, or synthetic data from a model of the dynamics. Figure 3 finally shows the specialized deployment. As the machine, ed, operates and gathers data (GET), the machine, ed, can be more and more specialized using the trained network model tnm, so it can more accurately predict the demand for its context.

The deployment overview in Figure 3 shows, which networks are deployed in which systems and which data is needed on them, comprising the history data, hist_diff, from machines at other locations, ed_diff, see Figure 2, and the history data, hist_sp, from the specific machine, ed. Thus, on each machine, a data storage is needed for this history. In addition, further storage is comprised to store the neural network specially trained for this context-specific data.
Two dashed lines symbolize the required data transfer POST and GET, which must be considered to make this work, to move, POST, the location-specific data, hist_sp, to the training environment, tr, and to move, GET, the trained network model, tnm, to the machine, ed. If the machine, ed, has network connection, this could be done remotely via internet, e.g. via a REST API provided by the training environment tr and used by the machine, ed, to periodically push the latest history (POST) and to pull the most recent network model (GET). In a case, in which the embedded machine, ed, might not have such a connection, this could also be done as an additional maintenance job. As the dynamics of each context, e.g. location, might change over time due to changes in the local environment, e.g. timetables, production rates, etc., this loop of "data upload **→** training **→** deployment" preferably is performed regularly.

### Definitions

A net or network within the meaning of the present application may refer to any set of nodes which enables a plurality of participants to perform data communication with each other. The network may be a public network or a private network. The network may or may not be based on a blockchain platform. The network may be connected to at least one further network. The network may irreversibly process the data based on blockchain techniques.

A distributed network within the meaning of this application may refer to any database implemented in a network, which is at least partly stored redundantly on several network nodes remote from each other. Blockchain technology may comprise a plurality of blocks comprising data related to transactions and/or Smart Contracts. Chaining of different blocks may be implemented by cryptographic hash values stored in each block, wherein each hash value may refer to data of a previous block.

A service within the meaning of the present application means, what the system, which includes the embedded device(s), provides to users or what it does within a technical context, e.g. producing or selling goods.

As used herein, the term computing system refers, for example, to a device, apparatus or a plant. A computing system can, for example, be a field device. Preferably, the computing system comprises a plurality of hardware components and/or software components. Furthermore, the computing system can, for example, comprise at least one component having a communication interface configured to connect the inventive apparatus to an environment, user and/or other system. Unless specifically stated otherwise, it is appreciated that throughout the specification discussions utilizing terms such as "processing", "computing", "computer-based", "calculating", "determining", "generating", "configuring" or the like, refer to the action and/or processes of a computer that manipulates and/or transforms data into other data, said data represented as physical, e.g. such as electronic, quantities. The term "computer" should be expansively construed to cover any kind of electronic device with data processing capabilities, including, by way of non-limiting example, personal computers, servers, handheld computer systems, Pocket PC devices, Cellular communication device and other communication devices with computing capabilities, processors and other electronic computing devices.

The term evaluation in the context of this application means processing of observation data, created based on measurement configuration.

With the terms components or modules, here and in the following, the interface component, the task generation software component, the data storage components as well as other components referred to, may for example be software modules of a computer program for carrying out the computer-implemented method. Alternatively, the modules may correspond to respective hardware modules with software for carrying out the respective steps stored on them.

Embedded devices (ed, ed_diff) like edge devices, FPGAs or the like provide very limited computing and communication resources, limited resources in this context of this application meaning not more than 4 GB RAM, especially not more than 1 GB RAM. Examples are edge devices or control and/or computing units in plants, factories, production sites, buildings and their information structure and/or means of transport. Input data e.g. comprises history data of several or one specific dynamic context of an embedded machine.

Ensemble networks are multiple instances of the same neural network, which run through the same training procedure, but are initialized randomly. An ensemble network is basically an aggregation of multiple (preferably identical) individual neural network models.

### References:

- I/O: Input / Output
- dec: decision
- spec: specialize, the first step is to specialize the whole ensemble
- pick: choose, e.g. the most balanced; the pick is a reduction, plus the subsequent training for better imitating the m/sp
- net: network(s), deployed in which systems, especially individual network, network models
- en: ensemble of multiple (m) individual networks
- en_sp: ensemble of multiple (m) special trained individual networks
- 11: system (s) , which data is needed on
- ed: edge device, embedded device
- ed_diff: further devices, e.g. different position, different context
- tr: training environment
- tnm: trained network model, e.g. <1 special, swarm>, subset ensemble of n special trained individual networks, n-ensemble made of an n-subset of individual networks from a special trained m-ensemble, preferably already further trained to better imitate this m-ensemble
- m: number of the individual networks (net)
- b: basic, e.g. basic input data portion
- sp: special, e.g. special input data portion
- n: number of picked individual networks (net), meaning n<m
- sw: Swarm meaning a set of indiviuals acting together, in this case, the full-sized ensemble of individual neural networks
- ini: initial deployment
- hist_diff: history data from machines at other locations
- hist_sp: history data from the specific machine
- stor_h: data storage for history
- stor_d: data storage for dynamic-context-specific data from neural network
- - - -: dashed lines represent data transfer
- POST: the specific machine periodically pushes the latest history / specialized data
- GET: the specific machine pulls the most recent network model (tnm)

## Claims

1. A neural network training method for specific dynamic context of an embedded device (ed) comprising:
- Splitting an input data set into several input data portions, at least a basic input data portion (b) and a specialization input data portion (sp), which corresponds to the specific dynamic context of the embedded device (ed),
- Performing a basic training of an ensemble network (en) based on basic input data, by
multiplexing input data to multiple (m) network instances (net) of same neural network, which multiple (m) instances (net) form the ensemble network (en), then
initializing a training procedure on each network instance (net), followed by
aggregating the multiple predictions as output data made by multiple (m) instances (net),
- Performing a special training of the ensemble network (en) with a first portion of the specialization input data (sp),
- Selecting a subset specific ensemble (en_n/sp) out of the multiple (m) network instances (net) of the special trained ensemble network (enm/sp), by comparing the results of the individual networks (net) with the ensemble's based on a second portion of the specialization input data (sp) fed into both, the special trained ensemble network (en_sp) and each of its individual networks (net),
- Performing an imitation training of the selected (pick) subset ensemble network based on third portion of specialization input data (sp), comprising continued learning from target results from special trained ensemble network (tnm, en_sp).

2. A neural network training method according to claim 1, wherein the selection step (pick) is based on closest emulation of the ensemble network (en).

3. A neural network training method according to claim 1 or 2, wherein the selection step (pick) is based on an ensemble decision algorithm.

4. A neural network training method according to one of claims 1 to 3, comprising an initialization training, in which a basic training of the ensemble network (en) is performed based on subset (n) of the basic input data (b), followed by a selection of a subset (n) specific ensemble (en) is based on a minor subset of basic input data (b) and an imitation training is performed with the remaining subset of the basic input data (b), and followed by deploying the initially trained subset ensemble network (ini) to an embedded device (ed).

5. A neural network training method according to one of claims 1 to 3, comprising an initialization training, in which a special training of the ensemble network is performed based on specialization input data from another embedded device in another specific dynamic context, which is assumed to have similar dynamics, or synthetic data from a model of the dynamics.

6. A neural network training method according to one of claims 1 to 4, wherein there are up to 50 individual networks, preferably up to 100 networks.

7. A neural network training system for training a neural network for specific dynamic context of an embedded device (ed), the training system comprising:
- plurality of embedded devices (ed, ed_diff), each with at least a storage for history data (hist, hist_diff), wherein any of the embedded devices (ed, ed_diff) provides very limited computing resources and each with at least one communication path to the trainer (tr),
- trainer (tr), configured to perform the basic training, the special training, the selection algorithm and the imitation training, comprising a storage for all history data (hist, hist_diff) from any of the embedded devices (ed, ed_diff), and
- at least one communication path to (GET) and from (POST) the embedded device (ed).

8. Embedded device (ed) comprising network instance trained according to a method according to one of the claims 1 to 6.

9. Computing device (T), configured to perform the neural network training method for specific dynamic context of an embedded device (ed) according to one of the claims 1 to 6.

10. A non-transitory computer-readable medium provided with executable instructions that, when executed, cause a computing device (T) to process the training method according to claims 1 to 6.
